# EUROPEAN PATENT SPECIFICATION

(11) **EP 4 471 953 B1**
(45) Date of publication and mention of the grant of the patent: **04.03.2026**
(21) Application number: 24166632.0
(22) Date of filing: 27.03.2024
(51) Int. Cl.: B60L 50/64, H01M 50/204, H01M 50/213, H01M 50/244, H01M 50/249, H01M 50/262, H01M 50/264, H01M 50/289

(54) **BATTERY BOX AND ELECTRIC EQUIPMENT**
BATTERIEKASTEN UND ELEKTRISCHE AUSRÜSTUNG
BOÎTIER DE BATTERIE ET ÉQUIPEMENT ÉLECTRIQUE

(30) Priority: 29.05.2023 CN 202310624038
(43) Date of publication of application: 04.12.2024
(73) Proprietor: Eve Energy Co., Ltd., Huizhou, Guangdong 516006 (CN)
(72) Inventor: QIU, Wencong, Huizhou 516006 (CN); CHEN, Zhiwei, Huizhou 516006 (CN); CHEN, Zhaohai, Huizhou 516006 (CN)
(74) Representative: Herrero & Asociados, S.L.

(56) References cited:
- EP-A1- 4 064 430
- EP-A1- 4 184 686
- CN-A- 114 552 115
- CN-B- 114 388 958
- US-A1- 2023 113 884

## Description

### TECHNICAL FIELD

The present disclosure relates to the technical field of batteries, and in particular, to a battery box and an electric equipment.

### BACKGROUND

As one of core components of an electric vehicle, a power battery is the energy hub of the electric vehicle. A battery box, as an energy distribution unit of the power battery, plays an irreplaceable role in the entire vehicle. With the development of the power battery technology, higher requirements are put forward for the mechanical strength of the battery box.

At present, in related arts, in order to improve a side anti-collision ability of the battery box, reinforcement beams are generally provided in the middle of the box body. The reinforcement beam improves the impact resistance of the battery box, improves the mechanical performance of the box body, and has a simple structure, lighter weight, and higher reliability. However, for other positions in the battery box that are far away from the reinforcement beams, when the battery box is subjected to external impact, side walls of the box body still have the risk of wear and tear, thereby causing safety accidents. At the same time, in the related arts, the reinforcement beams occupy a large internal space of the battery box, which has the problem of low space utilization.

US2023113884A1 discloses a battery pack including a plurality of battery cells; a bus bar assembly having a first side and a second side, the second side of the bus bar assembly provided to a first side of the plurality of battery cells and electrically connected to the plurality of battery cells; a cooling unit disposed at a second side of the bus bar assembly and arranged between the plurality of battery cells along a longitudinal direction of the battery pack; and side structure units configured to accommodate the cooling unit and the plurality of battery cells, wherein one side structure unit, a first set of the plurality of battery cells, the cooling unit, a second set of the plurality of battery cells and another side structure unit are coupled to be sequentially arranged in the named order along a width direction of the battery pack.

CN114552115A discloses a battery module and an electric vehicle. The battery module comprises a box body, a longitudinal beam and a tray, the box body is provided with an exhaust port; the longitudinal beams are arranged in the box body and abut against the bottom face of the box body so as to partition containing areas, located on the two sides of the longitudinal beams in the width direction, in the box body. The tray is arranged in the accommodating area and is used for mounting a battery cell, a through hole opposite to one end of the battery cell is formed in the tray, the tray and the bottom surface of the box body are arranged at an interval to form a pressure relief cavity, and the through hole and the exhaust port are both communicated with the pressure relief cavity. The containing areas located on the two sides of the longitudinal beams in the box body are separated through the longitudinal beams, so that gas and sprayed matter exhausted by the battery cell in thermal runaway cannot make contact with the battery cell in the containing area on the other side, and the situation that the battery cell in the containing area on the other side is affected, and thermal runaway of the battery cell in the whole box body is caused is avoided.

EP4184686A1 discloses a battery pack, which includes a battery cell assembly comprising a plurality of battery cells, a busbar assembly on one side of the battery cell assembly, a cooling unit between the plurality of battery cells, and a cell accommodation unit which partitions the plurality of battery cells together with the cooling unit.

CN114388958B discloses a box body of a battery, the battery and an electric device. The box body of the battery comprises a first beam, a second beam and a connecting assembly, and a groove is formed in the surface of the first beam; the second beam is arranged on one side, provided with the groove, of the first beam, and the first beam and the second beam are used for limiting a space for accommodating the battery monomers; and the connecting assembly is used for connecting the first beam and the second beam, and at least part of the connecting assembly is arranged in the first beam and the second beam. The battery comprises the box body of the battery. The power utilization device comprises the battery. According to the battery box provided by the invention, the connecting assembly is arranged in the first beam and the second beam to be connected with the first beam and the second beam, and the connecting assembly is matched with the first beam and the second beam to jointly share and bear relatively large external force, so that the structural strength of the battery box, the battery and the electric device is improved.

EP4064430A1 discloses a battery module having a reinforcement member to reinforce the mechanical strength of a module case. To achieve the above-described object, the battery module according to the present disclosure includes a plurality of secondary batteries arranged in at least one direction, a module case including a cover portion, a bottom portion and a side portion to form an internal space in which the plurality of secondary batteries is mounted, and a reinforcement member disposed in the module case and fixed to a lower surface of the cover portion and an upper surface of the bottom portion.

### SUMMARY

Embodiments of the present disclosure provide a battery box and an electric equipment according to the appended claims 1-15 to solve or at least partially solve the shortcomings of the above background.

In a first aspect, embodiments of the present disclosure provide a battery box. The battery box includes a box body and a battery module located in the box body. The battery module includes a plurality of cell groups arranged at intervals along a first direction, and each cell group includes a plurality of battery cells arranged at intervals along a second direction. The box body includes a box frame and a reinforcement module. The box frame includes a bottom plate and a plurality of side beams. The plurality of side beams are fixedly arranged on edges of the bottom plate to define an accommodation cavity. The battery module and the reinforcement module are both arranged in the accommodation cavity. The reinforcement module includes a plurality of reinforcement beams arranged at intervals along the first direction. Both ends of the reinforcement beam are fixedly connected to the side beams. One cell group is provided between adjacent reinforcement beams.

In a second aspect, embodiments of the present disclosure provide an electrical device, which includes any one of the battery boxes described above.

Beneficial effects of the embodiments of the present disclosure: Embodiments of the present disclosure provide a battery box and an electric equipment. The battery box includes the box body and the battery module located in the box body. The battery module includes the plurality of cell groups arranged at intervals along the first direction, and each cell group includes the plurality of battery cells arranged at intervals along the second direction. The box body includes the box frame and the reinforcement module. The box frame includes the bottom plate and the plurality of side beams. The plurality of side beams are fixedly arranged on the edges of the bottom plate to define the accommodation cavity. The battery module and the reinforcement module are both arranged in the accommodation cavity. The reinforcement module includes the plurality of reinforcement beams arranged at intervals along the first direction. Both ends of the reinforcement beam are fixedly connected to the side beams. One cell group is provided between adjacent reinforcement beams. The solutions provided by the embodiments of the present disclosure achieve a high-strength design while meeting the hardness requirements of the battery box.

### BRIEF DESCRIPTION OF THE DRAWINGS

In order to explain the technical solutions in the embodiments more clearly, the drawings needed to be used in the description of the embodiments will be briefly introduced below. Obviously, the drawings in the following description are only some embodiments of the present disclosure. Those skilled in the art may also obtain other drawings based on these drawings without exerting creative efforts.
FIG. 1 is a schematic structural view of a box body provided by an embodiment of the present disclosure.
FIG. 2 is an exploded view of the box body provided by the embodiment of the present disclosure.
FIG. 3 is a top view of the box body provided by the embodiment of the present disclosure.
FIG. 4 is a schematic structural view of a box frame provided by an embodiment of the present disclosure.
FIG. 5 is a schematic structural view of a reinforcement module provided by an embodiment of the present disclosure.
FIG. 6 is a schematic structural view of a support plate provided by an embodiment of the present disclosure.
FIG. 7 is an enlarged schematic view of part A in FIG. 6.
FIG. 8 is a schematic structural view of a bottom plate provided by an embodiment of the present disclosure.

### DETAILED DESCRIPTION

The embodiments provide a battery box and an electric equipment. Each is explained in detail below. It should be noted that the order of description of the following embodiments does not limit the preferred order of the embodiments.

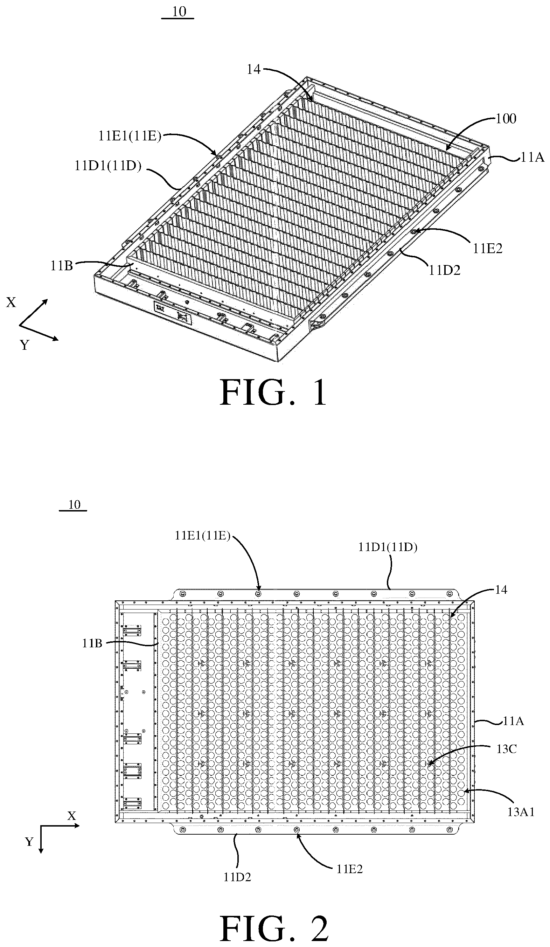

Referring to FIG. 1 to FIG. 7, the embodiments provide a battery box and an electric equipment. The battery box includes a box body 10 and a battery module (not shown in the figures) located in the box body 10. The battery module includes a plurality of cell groups arranged at intervals along a first direction X. Each cell group includes a plurality of battery cells arranged at intervals along a second direction Y. The box body 10 includes a box frame 11 and a reinforcement module 14. The box frame 11 includes a bottom plate 12 and a plurality of side beams 11A. The plurality of side beams 11A are fixedly arranged on edges of the bottom plate to define an accommodation cavity 100. The battery module and the reinforcement module 14 are both arranged in the accommodation cavity 100. The reinforcement module 14 includes a plurality of reinforcement beams 14A arranged at intervals along the first direction X. Both ends of the reinforcement beam 14A are fixedly connected to the side beams 11A. One cell group is provided between every adjacent two of the reinforcement beams 14A.

It should be noted that in the related arts, in order to improve a side anti-collision ability of the battery box, the reinforcement beams are generally provided in the middle of the box body. The reinforcement beam improves the impact resistance of the battery box, improves the mechanical performance of the box body, and has a simple structure, lighter weight, and higher reliability. However, for other positions in the battery box that are far away from the reinforcement beams, when the battery box is subjected to external impact, side walls of the box body still have the risk of wear and tear, thereby causing safety accidents. At the same time, in the related arts, the reinforcement beams occupy a large internal space of the battery box, which has the problem of low space utilization.

It can be understood that in the embodiments, the box body includes the reinforcement module, and the reinforcement module includes the plurality of reinforcement beams arranged at intervals along the first direction. Both ends of each reinforcement beam are fixedly connected to the side beams, and one cell group is provided between every adjacent reinforcement beams, thereby achieving a high-strength design while meeting the hardness requirements of the battery box. Furthermore, the reinforcement beam is arranged between adjacent cell groups, so that the space utilization of the battery box is increased.

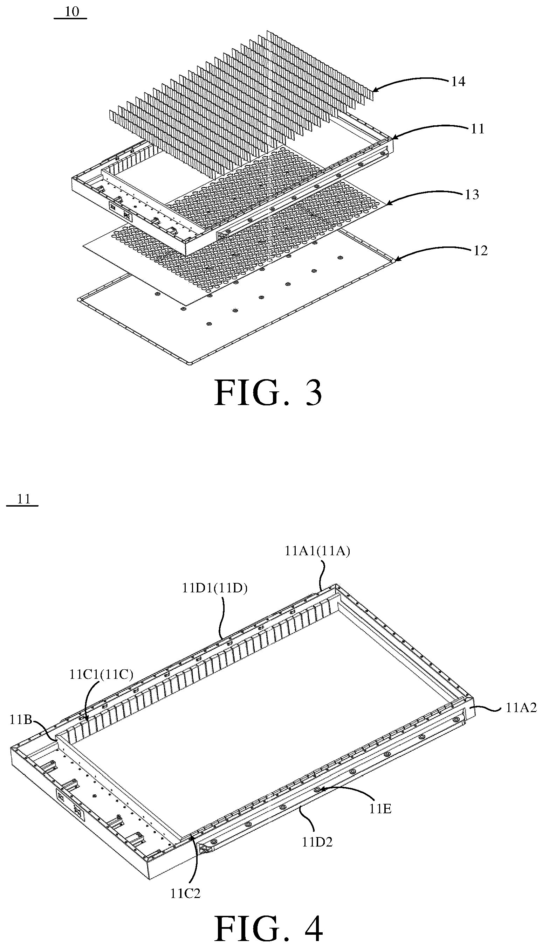

In an embodiment, referring to FIG. 1, FIG. 2, and FIG. 3, FIG. 1 is a schematic structural view of the box body provided by an embodiment of the present disclosure, FIG. 2 is an exploded view of the box body provided by the embodiment of the present disclosure, and FIG. 3 is a top view of the box body provided by the embodiment of the present disclosure.

In the embodiment, the battery box includes a box body 10 and a battery module located in the box body 10. The box body 10 includes a box frame 11 and a reinforcement module 14. The box frame 11 includes a bottom plate 12, a support plate 13, and a plurality of side beams 11A. The support plate 13 is located between the bottom plate 12 and the reinforcement module 14. The support plate 13 is fixedly connected to the reinforcement module 14 and the bottom plate 12. The plurality of the side beams 11A are fixedly arranged on edges of the bottom plate 12 to define an accommodation cavity 100. The battery module and the reinforcement module 14 are both arranged in the accommodation cavity 100.

Specifically, the box frame 11 further includes a cross beam 11B. The plurality of side beams 11A are connected in sequence to form an annular structure. Both ends of the cross beam 11B are in contact with the side beams 11A, so that the cross beam 11B and the plurality of side beams 11A form the accommodation cavity 100 for placing the battery module.

The battery module and the reinforcement module 14 are both disposed in the accommodation cavity 100. The reinforcement module 14 includes a plurality of reinforcement beams 14A arranged at intervals along the first direction X. Both ends of the reinforcement beam 14A are fixedly connected to the side beams 11A. The cell groups are arranged between adjacent reinforcement beams 14A. Furthermore, in the embodiment, two cell groups are located between every two adjacent reinforcement beams 14A. The reinforcement beam 14A abuts against outer peripheral surfaces of the battery cells located on its both sides, and the reinforcement beam 14A matches the outer peripheral surface of the battery cell.

It should be noted that in the embodiment, the first direction is marked with X, the second direction is marked with Y, and the first direction X and the second direction Y are arranged at a right angle.

Specifically, in the embodiment, the battery cells are cylindrical battery cells, and the battery module includes a plurality of cylindrical battery cells. Multiple cylindrical battery cells are provided between adjacent reinforcement beams 14A. The reinforcement beam 14A has a corrugated structure matching the outer peripheral surface of the cylindrical battery cell. A thickness of the reinforcement beam 14A is greater than or equal to 1 mm and less than or equal to 4 mm. Preferably, the thickness of the reinforcement beam 14A is one of 1 mm, 2 mm, 3 mm, and 4 mm.

It can be understood that in the embodiment, the reinforcement beam 14A is arranged to contact the outer peripheral surfaces of the battery cells located on its both sides, and the reinforcement beam 14A matches the outer peripheral surface of the battery cell, so that a structure of the reinforcement beam 14A is added to a gap between adjacent cell groups to increase the space utilization of the battery box. Furthermore, the reinforcement beams 14A are evenly distributed, which may effectively disperse the force, reduce stress concentration, and enhance the strength of the battery box.

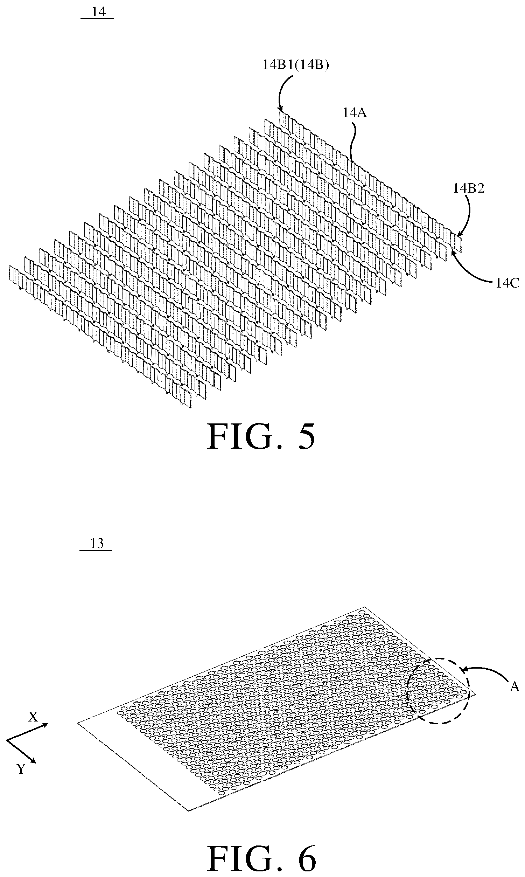

Furthermore, referring to FIG. 1, FIG. 4, and FIG. 3, FIG. 4 is a schematic structural view of the box frame provided by an embodiment of the present disclosure, and FIG. 5 is a schematic structural view of the reinforcement module provided by an embodiment of the present disclosure.

In the embodiment, a plurality of recesses 11C are provided on sides of the side beams 11A close to the reinforcement beams 14A, plug-in parts 14B are provided on sides of the reinforcement beams 14A close to the side beams 11A, one plug-in part 14B is plugged in a corresponding one recess 11C, and the plug-in part 14B and the recess 11C are fixed by welding. Alternatively, the plurality of plug-in parts 14B are provided on sides of the side beams 11A close to the reinforcement beams 14A, the recesses 11C are provided on sides of the reinforcement beams 14A close to the side beams 11A, one plug-in part 14B is plugged in a corresponding one recess 11C, and the plug-in part 14B and the recess 11C are fixed by welding.

Specifically, in the embodiment, the side beams 11A include a first side beam 11A1 and a second side beam 11A2 arranged oppositely. One end of the cross beam 11B is in contact with the first side beam 11A1, and the other end of the cross beam 11B is in contact with the second side beam 11A2. The reinforcement beams 14A are located between the first side beam 11A1 and the second side beam 11A2. An extending direction of the reinforcement beam 14A is parallel to an extending direction of the cross beam 11B.

The first side beam 11A1 is provided with a plurality of first recesses 11C1 on a side close to the reinforcement module 14, and the second side beam 11A2 is provided with a plurality of second recesses 11C2 on a side close to the reinforcement module 14. One first recess 11C1 is provided corresponding to one second recess 11C2. The reinforcement beam 14A is located between the first recess 11C1 and the second recess 11C2. Each reinforcement beam 14A includes a first plug-in part 14B1 and a second plug-in part 14B2. The reinforcement beam 14A is plugged in the first recess 11C1 through the first plug-in part 14B1, and the reinforcement beam 14A is plugged in the second recess 11C2 through the second plug-in part 14B2. The first plug-in part 14B1 and the first recess 11C1 are fixed by welding. The second plug-in part 14B2 and the second recess 11C2 are fixed by welding.

It can be understood that in the embodiment, the reinforcement beam 14A is plugged in the first recess 11C1 through the first plug-in part 14B1, and the reinforcement beam 14A is plugged in the second recess 11C2 through the second plug-in part 14B2, thereby improving the assembly efficiency when assembling the reinforcement beams 14A and increasing the production capacity of the battery box. At the same time, the first plug-in part 14B1 and the first recess 11C1 are fixed by welding, the second plug-in part 14B2 and the second recess 11C2 are fixed by welding, and the first recess 11C1 and the second recess 11C2 are configured to limit the reinforcement beam 14A, which may prevent the reinforcement beam 14A from moving when the battery box is subjected to external impact, thereby improving the stability of the battery box.

It should be noted that the embodiment does not specifically limit positions of the recess 11C and the plug-in part 14B. The embodiment illustrates the technical solution of the present disclosure by only taking an example that the plurality of recesses 11C provided on sides of the side beams 11A close to the reinforcement beams 14A and the plug-in parts 14B are provided on sides of the reinforcement beams 14A close to the side beams 11A.

Furthermore, in the embodiment, the battery box further includes two longitudinal beams 11D arranged oppositely along the second direction Y. The longitudinal beams 11D are located on sides of the side beams 11A facing away from the reinforcement beams 14A. Each longitudinal beam 11D is provided with a plurality of mounting points 11E arranged at intervals along the first direction X. The reinforcement beams 14A are located between the two longitudinal beams 11D, and the mounting points 11E correspond to the reinforcement beams 14A one by one. The mounting points 11E are configured to connect to mounting portions of a vehicle body to install the battery box on the vehicle body.

Specifically, in the embodiment, the longitudinal beams 11D include a first longitudinal beam 11D1 and a second longitudinal beam 11D2 arranged oppositely along the second direction Y. The first longitudinal beam 11D1 is located on one side of the first side beam 11A1 facing away from the reinforcement beams 14A, and the second longitudinal beam 11D2 is located on one side of the second side beam 11A2 facing away from the reinforcement beams 14A. The first longitudinal beam 11D1 is provided with a plurality of first mounting points 11E1 arranged at intervals along the first direction X. The second longitudinal beam 11D2 is provided with a plurality of second mounting points 11E2 arranged at intervals along the first direction X. One first mounting point 11E1 is arranged corresponding to one second mount point 11E2. The reinforcement beams 14A are located between the first longitudinal beam 11D1 and the second longitudinal beam 11D2. The extending direction of the reinforcement beam 14A is consistent with a direction of force transmission on the mounting points 11E to strengthen the load bearing capacity of the mounting points 11E, thereby further enhancing the mounting strength of the entire battery box.

It should be noted that in the embodiment, the first longitudinal beam 11D1 and the first side beam 11A1 may be integrally formed, and the second longitudinal beam 11D2 and the second side beam 11A2 may be integrally formed, so that the structural strength of the mounting points 11E is further enhanced and the structural stability of the entire battery box is enhanced.

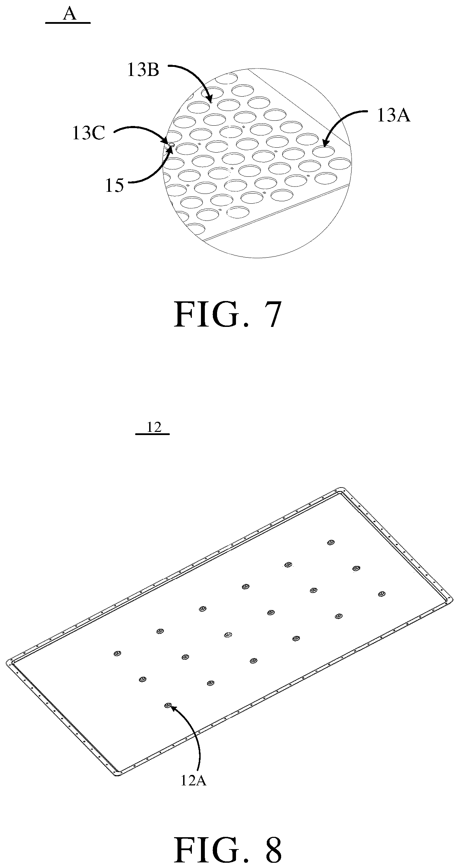

Furthermore, referring to FIG. 1, FIG. 6, FIG. 7, and FIG. 8, FIG. 6 is a schematic structural view of the support plate provided by an embodiment of the present disclosure, FIG. 7 is an enlarged schematic view of part A in FIG. 6, and FIG. 8 is a schematic structural view of the bottom plate provided by an embodiment of the present disclosure.

In the embodiment, the support plate 13 is provided with a plurality of installation slots 13A. Each installation slot 13A penetrates the support plate 13. The installation slots 13A and the reinforcement beams 14A are arranged at intervals. One battery cell is correspondingly installed in one installation slot 13A.

It can be understood that in the embodiment, one battery cell is correspondingly arranged and installed in one installation slot 13A, so that multiple battery cells may be installed simultaneously during assembly, which greatly improves the assembly efficiency of the battery module, ensures assembly accuracy, and is easy to realize automation. A structural glue may be used to fixedly connect the support plate 13 to the battery cells, making the connection convenient and reliable, and effectively preventing the battery cells from loosening and falling off.

Furthermore, in the embodiment, the adjacent installation slots 13A are arranged side by side or in a staggered manner. A shape of the installation slot 13A includes but is not limited to any one or more combinations of rhombus, circle, and regular hexagon. On a condition that the shape of the installation slot 13A is a rhombus, more and denser openings may be provided to minimize the Young's modulus of the support plate 13. On a condition that the shape of the installation slot 13A is circular, the stability of the circle may be used to alleviate the stress when the support plate 13 is bent. On a condition that the shape of the installation slot 13A is a regular hexagon, which is similar to a honeycomb shape, the strength of a bending area may be supplemented when the support plate 13 is bent, and the fracture damage of the support plate 13 may be avoided.

Specifically, in the embodiment, aperture sizes of the plurality of installation slots 13A are equal, and the adjacent installation slots 13A are disposed in a staggered manner. It can be understood that the misaligned installation slots 13A may reduce the bending stress of the support plate 13 when the support plate 13 is bent under force, thereby avoiding adverse phenomena such as bending of the support plate 13 under the force.

Furthermore, in the embodiment, one of the support plate 13 and the reinforcement beam 14A provided with fixing holes 13B, and the other one of the support plate 13 and the reinforcement beam 14A is provided with protrusions 14C. One protrusions 14C is provided corresponding to one fixing hole 13B, and the protrusion 14C is clamped in the fixing hole 13B.

Preferably, in the embodiment, the support plate 13 is provided with the plurality of fixing holes 13B, and each fixing hole 13B penetrates the support plate 13. Sides of the reinforcement beams 14A close to the support plate 13 are provided with the plurality of protrusions 14C. One protrusion 14C is provided corresponding to one fixing hole 13B. The protrusions 14C are clamped in the fixing holes 13B, and the protrusions 14C are fixedly to the support plate 13 by welding. Preferably, the protrusions 14C of the reinforcement beams 14A and the support plate 13 are fixed by spot welding, and welding points are located on one side of the support plate 13 close to the bottom plate 12.

It can be understood that the plurality of installation slots 13A are provided on the support plate 13, and the installation slots 13A may reduce the rigidity of the support plate 13. In the embodiment, the protrusions 14C of the reinforcement beams 14A and the support plate 13 are fixed by spot welding, thereby increasing the rigidity of the support plate 13 and improving the stability of the battery box.

Specifically, in the embodiment, the fixing holes 13B and the installation slots 13A are arranged at intervals. An aperture of the fixing hole 13B is less than an aperture of the installation slot 13A. One protrusion 14C is provided corresponding to one fixing hole 13B. The protrusion 14C passes through the fixing hole 13B fixed to the support plate 13 by welding, and the welding point is located on one side of the support plate 13 facing away from the reinforcement beams 14A.

It can be understood that in the embodiment, the support plate 13 is provided with the plurality of fixing holes 13B, sides of the reinforcement beams 14A close to the support plate 13 are provided with the plurality of protrusions 14C, the protrusions 14C are clamped in the fixing holes 13B, and the protrusions 14C and the support plate 13 are fixed by welding, so that the fixing strength between the reinforcement beams 14A and the support plate 13 is enhanced, thereby increasing the structural strength of the battery box. At the same time, when collision occurs, the support plate 13 may provide a certain supporting force to the battery module, thereby effectively improving the installation stability of the battery module and further improving the protection effect of the battery box on the battery module.

Furthermore, in the embodiment, a plurality of openings 13C are provided on the support plate 13. The bottom plate 12 is provided with a plurality of connection holes 12A. One connection hole 12A is provided corresponding to one opening 13C. The battery box includes a plurality of fixing members 15. One fixing member 15 is arranged corresponding to one opening 13C. The fixing member 15 passes through the opening 13C and the connection hole 12A in sequence to be fixedly connected to the bottom plate 12. Specifically, the fixing member 15 is threadedly connected to the bottom plate 12 through the opening 13C, and the support plate 13 is fixedly connected to the bottom plate 12 through the fixing member 15.

Specifically, the openings 13C and the fixing holes 13B are arranged at intervals. The openings 13C and the installation slots 13A are fixedly arranged. The fixing members 15 include but is not limited to bolts. It can be understood that in the embodiment, the fixing member 15 is threadedly connected to the bottom plate 12 through the opening 13C, and the support plate 13 is fixedly connected to the bottom plate 12 through the fixing member 15, thereby improving the structural stability of the battery box.

It should be noted that in actual production, the battery box further includes a liquid cooling module disposed in the accommodation cavity 100. The liquid cooling module includes a plurality of liquid cooling plates arranged at intervals along the first direction X. The plurality of liquid cooling plates and the plurality of the reinforcement beams 14A are alternately arranged along the first direction X. One cell group is arranged between every adjacent two of the liquid cooling plates and the reinforcement beams 14A, which facilitates heat dissipation of the battery module, improves the cooling effect of the battery box, and improves temperature uniformity.

The embodiments also provides an electrical device, which includes the battery box described in any of the above embodiments.

It can be understood that the battery box has been described in detail in the above embodiments, and the description will not be repeated here.

The battery box includes the battery module, and the battery module is used as a power supply for the electric equipment. Therefore, the electric equipment also has various advantages of the above-mentioned battery module, which simplifies an overall structure of the electric equipment. The electric equipment may be a vehicle, an aircraft, or a mechanical production equipment, etc.

Embodiments of the present disclosure provide the battery box and the electric equipment. The battery box includes the box body and the battery module located in the box body. The battery module includes the plurality of cell groups arranged at intervals along the first direction, and each cell group includes the plurality of battery cells arranged at intervals along the second direction. The box body includes the box frame and the reinforcement module. The box frame includes the bottom plate and the plurality of side beams. The plurality of side beams are fixedly arranged on the edges of the bottom plate to define the accommodation cavity. The battery module and the reinforcement module are both arranged in the accommodation cavity. The reinforcement module includes the plurality of reinforcement beams arranged at intervals along the first direction. Both ends of the reinforcement beam are fixedly connected to the side beams. One cell group is provided between adjacent reinforcement beams. The solutions provided by the embodiments of the present disclosure achieve a high-strength design while meeting the hardness requirements of the battery box.

## Claims

1. A battery box, **characterized by** comprising a box body (10) and a battery module located in the box body (10);
wherein the battery module comprises a plurality of cell groups arranged at intervals along a first direction, and each of the cell groups comprises a plurality of battery cells arranged at intervals along a second direction; and
**characterized in that** the box body (10) comprises a box frame (11) and a reinforcement module (14), the box frame (11) comprises a bottom plate (12) and a plurality of side beams (11A), the plurality of side beams (11A) are fixedly arranged on edges of the bottom plate (12) to define an accommodation cavity (100), the battery module and the reinforcement module (14) are both arranged in the accommodation cavity (100), the reinforcement module (14) comprises a plurality of reinforcement beams (14A) arranged at intervals along the first direction, both ends of each of the reinforcement beams (14A) are fixedly connected to the side beams (11A), and every adjacent two of the reinforcement beams (14A) are inserted with one of the cell groups,
wherein the battery box further comprises a liquid cooling module disposed in the accommodation cavity (100), the liquid cooling module comprises a plurality of liquid cooling plates arranged at intervals along the first direction, the plurality of liquid cooling plates and the plurality of the reinforcement beams (14A) are alternately arranged along the first direction, one cell group is arranged between every adjacent two of the liquid cooling plates and the reinforcement beams (14A).

2. The battery box according to claim 1, **characterized in that**, each of the reinforcement beams (14A) abuts against outer peripheral surfaces of the battery cells located on its both sides, and each of the reinforcement beams (14A) matches the outer peripheral surfaces of the battery cells.

3. The battery box according to claim 2, **characterized in that**, the battery cell are cylindrical battery cells, and each of the reinforcement beams (14A) has a corrugated structure matching the outer peripheral surfaces of the cylindrical battery cells.

4. The battery box according to claim 1, **characterized in that**, a plurality of recesses (11C) are provided on sides of the side beams (11A) close to the reinforcement beams (14A), a plurality of plug-in parts (14B) are provided on sides of the reinforcement beams (14A) close to the side beams (11A), and each of the plug-in parts (14B) is plugged in a corresponding one of the recesses (11C); alternatively,
the plurality of plug-in parts (14B) are provided on the sides of the side beams (11A) close to the reinforcement beams (14A), the plurality of recesses (11C) are provided on the sides of the reinforcement beams (14A) close to the side beams (11A), and each of the plug-in parts (14B) is plugged in a corresponding one of the recesses (11C).

5. The battery box according to claim 4, **characterized in that**, each of the plug-in parts (14B) and the corresponding one of the recesses (11C) are fixed by welding.

6. The battery box according to any one of claims 1-5, **characterized in that**, the box body (10) further comprises two longitudinal beams (11D) arranged oppositely along the second direction, the longitudinal beams (11D) are located on sides of the side beams (11A) facing away from the reinforcement beams (14A), each of the longitudinal beams (11D) is provided with a plurality of mounting points (11E) arranged at intervals along the first direction, and the mounting points (11E) correspond to the reinforcement beams (14A) one by one.

7. The battery box according to claim 6, **characterized in that**, the side beams (11A) comprise a first side beam (11A1) and a second side beam (11A2) arranged oppositely, the reinforcement beams (14A) are located between the first side beam (11A1) and the second side beam (11A2); and
the longitudinal beams (11D) comprise a first longitudinal beam (11D1) and a second longitudinal beam (11D2) arranged oppositely, the first longitudinal beam (11D1) is located on one side of the first side beam (11A1) facing away from the reinforcement beams (14A), and the second longitudinal beam (11D2) is located on one side of the second side beam (11A2) facing away from the reinforcement beams (14A).

8. The battery box according to claim 7, **characterized in that**, the first longitudinal beam (11D1) and the first side beam (11A1) are integrally formed, and the second longitudinal beam (11D2) and the second side beam (11A2) are integrally formed.

9. The battery box according to any one of claims 1-5, **characterized in that**, the box body (10) further comprises a support plate (13) located between the bottom plate (12) and the reinforcement module (14), and the support plate (13) is fixedly connected to the reinforcement module (14) and the bottom plate (12); and
the support plate (13) is provided with a plurality of installation slots (13A), each of the installation slots (13A) penetrates the support plate (13), the installation slots (13A) and the reinforcement beams (14A) are arranged at intervals, and each of the battery cells is installed in a corresponding one of the installation slots (13A).

10. The battery box according to claim 9, **characterized in that**, adjacent ones of the installation slots (13A) are arranged side by side or in a staggered manner.

11. The battery box according to claim 9, **characterized in that**, one of the support plate (13) and the reinforcement beam (14A) is provided with a plurality of fixing holes (13B), and the other one of the support plate (13) and the reinforcement beam (14A) is provided with protrusions (14C), one of the protrusions (14C) is provided corresponding to one of the fixing holes (13B), and each of the protrusions (14C) is clamped in a corresponding one of the fixing holes (13B).

12. The battery box according to claim 11, **characterized in that**, each of the protrusions (14C) and the corresponding one of the fixing holes (13B) are fixed by welding.

13. The battery box according to claim 9, **characterized in that**, a plurality of openings (13C) are provided on the support plate (13), the bottom plate (12) is provided with a plurality of connection holes (12A), and one of the connection holes (12A) is provided corresponding to one of the openings (13C); and
the battery box comprises a plurality of fixing members (15), one of the fixing members (15) is provided corresponding to one of the openings (13C), and each of the fixing members (15) passes through a corresponding one of the openings (13C) and a corresponding one of the connection holes (12A) in sequence to be fixedly connected to the bottom plate (12).

14. The battery box according to any one of claims 1-5, **characterized in that**, a thickness of each of the reinforcement beams (14A) is greater than or equal to 1 mm and less than or equal to 4 mm.

15. An electric equipment, **characterized by** comprising the battery box according to any one of claims 1-14.

## Patentansprüche

1. Batteriegehäuse, **gekennzeichnet durch** ein Gehäuse (10) und ein Batteriemodul, das in dem Gehäuse (10) angeordnet ist;
wobei das Batteriemodul eine Vielzahl von Zellengruppen umfasst, die in Abständen entlang einer ersten Richtung angeordnet sind, und jede der Zellengruppen eine Vielzahl von Batteriezellen umfasst, die in Abständen entlang einer zweiten Richtung angeordnet sind; und
**dadurch gekennzeichnet, dass** das Gehäuse (10) einen Gehäuserahmen (11) und ein Verstärkungsmodul (14) umfasst, der Gehäuserahmen (11) eine Bodenplatte (12) und eine Vielzahl von Seitenträgern (11A) umfasst, die Vielzahl von Seitenträgern (11A) fest an Rändern der Bodenplatte (12) angebracht sind, um einen Aufnahmeraum (100) zu definieren, das Batteriemodul und das Verstärkungsmodul (14) beide in dem Aufnahmeraum (100) angeordnet sind, das Verstärkungsmodul (14) eine Vielzahl von Verstärkungsträgern (14A) umfasst, die in Abständen entlang der ersten Richtung angeordnet sind, beide Enden jedes der Verstärkungsträger (14A) fest mit den Seitenträgern (11A) verbunden sind, und zwischen jeweils zwei benachbarten Verstärkungsträgern (14A) eine der Zellengruppen eingesetzt ist,
wobei das Batteriegehäuse ferner ein Flüssigkühlmodul umfasst, das in dem Aufnahmeraum (100) angeordnet ist, das Flüssigkühlmodul eine Vielzahl von Flüssigkühlplatten umfasst, die in Abständen entlang der ersten Richtung angeordnet sind, die Vielzahl von Flüssigkühlplatten und die Vielzahl der Verstärkungsträger (14A) abwechselnd entlang der ersten Richtung angeordnet sind, und eine Zellengruppe zwischen jeweils zwei benachbarten Flüssigkühlplatten und Verstärkungsträgern (14A) angeordnet ist.

2. Batteriegehäuse nach Anspruch 1, **dadurch gekennzeichnet, dass** jeder der Verstärkungsträger (14A) an Außenumfangsflächen der Batteriezellen an seinen beiden Seiten anliegt und jeder der Verstärkungsträger (14A) an die Außenumfangsflächen der Batteriezellen angepasst ist.

3. Batteriegehäuse nach Anspruch 2, **dadurch gekennzeichnet, dass** die Batteriezellen zylindrische Batteriezellen sind und jeder der Verstärkungsträger (14A) eine wellenförmige Struktur aufweist, die an die Außenumfangsflächen der zylindrischen Batteriezellen angepasst ist.

4. Batteriegehäuse nach Anspruch 1, **dadurch gekennzeichnet, dass** eine Vielzahl von Aussparungen (11C) an Seiten der Seitenträger (11A) in Richtung der Verstärkungsträger (14A) vorgesehen sind, eine Vielzahl von Steckteilen (14B) an Seiten der Verstärkungsträger (14A) in Richtung der Seitenträger (11A) vorgesehen sind und jedes der Steckteile (14B) in eine entsprechende der Aussparungen (11C) eingesteckt ist; oder
die Vielzahl von Steckteilen (14B) an den Seiten der Seitenträger (11A) in Richtung der Verstärkungsträger (14A) vorgesehen sind, die Vielzahl von Aussparungen (11C) an den Seiten der Verstärkungsträger (14A) in Richtung der Seitenträger (11A) vorgesehen sind und jedes der Steckteile (14B) in eine entsprechende der Aussparungen (11C) eingesteckt ist.

5. Batteriegehäuse nach Anspruch 4, **dadurch gekennzeichnet, dass** jedes der Steckteile (14B) und die entsprechende der Aussparungen (11C) durch Schweißen befestigt sind.

6. Batteriegehäuse nach einem der Ansprüche 1-5, **dadurch gekennzeichnet, dass** das Gehäuse (10) ferner zwei Längsträger (11D) umfasst, die entlang der zweiten Richtung gegenüberliegend angeordnet sind, die Längsträger (11D) an Seiten der Seitenträger (11A) abgewandt von den Verstärkungsträgern (14A) angeordnet sind, jeder der Längsträger (11D) mit einer Vielzahl von Montagepunkten (11E) versehen ist, die in Abständen entlang der ersten Richtung angeordnet sind, und die Montagepunkte (11E) den Verstärkungsträgern (14A) eins-zu-eins entsprechen.

7. Batteriegehäuse nach Anspruch 6, **dadurch gekennzeichnet, dass** die Seitenträger (11A) einen ersten Seitenträger (11A1) und einen zweiten Seitenträger (11A2) umfassen, die gegenüberliegend angeordnet sind, wobei die Verstärkungsträger (14A) zwischen dem ersten Seitenträger (11A1) und dem zweiten Seitenträger (11A2) angeordnet sind; und
die Längsträger (11D) einen ersten Längsträger (11D1) und einen zweiten Längsträger (11D2) umfassen, die gegenüberliegend angeordnet sind, wobei der erste Längsträger (11D1) an einer Seite des ersten Seitenträgers (11A1) abgewandt von den Verstärkungsträgern (14A) angeordnet ist und der zweite Längsträger (11D2) an einer Seite des zweiten Seitenträgers (11A2) abgewandt von den Verstärkungsträgern (14A) angeordnet ist.

8. Batteriegehäuse nach Anspruch 7, **dadurch gekennzeichnet, dass** der erste Längsträger (11D1) und der erste Seitenträger (11A1) einstückig ausgebildet sind und der zweite Längsträger (11D2) und der zweite Seitenträger (11A2) einstückig ausgebildet sind.

9. Batteriegehäuse nach einem der Ansprüche 1-5, **dadurch gekennzeichnet, dass** das Gehäuse (10) ferner eine Stützplatte (13) umfasst, die zwischen der Bodenplatte (12) und dem Verstärkungsmodul (14) angeordnet ist, und die Stützplatte (13) fest mit dem Verstärkungsmodul (14) und der Bodenplatte (12) verbunden ist, und
die Stützplatte (13) mit einer Vielzahl von Installationsnuten (13A) versehen ist, jede der Installationsnuten (13A) die Stützplatte (13) durchdringt, die Installationsnuten (13A) und die Verstärkungsträger (14A) beabstandet angeordnet sind und jede der Batteriezellen in einer entsprechenden der Installationsnuten (13A) installiert ist.

10. Batteriegehäuse nach Anspruch 9, **dadurch gekennzeichnet, dass** benachbarte Installationsnuten (13A) nebeneinander oder versetzt angeordnet sind.

11. Batteriegehäuse nach Anspruch 9, **dadurch gekennzeichnet, dass** entweder die Stützplatte (13) oder der Verstärkungsträger (14A) mit einer Vielzahl von Befestigungslöchern (13B) versehen ist und der andere von Stützplatte (13) und Verstärkungsträger (14A) mit Vorsprüngen (14C) versehen ist, wobei einer der Vorsprünge (14C) entsprechend einem der Befestigungslöcher (13B) vorgesehen ist und jeder der Vorsprünge (14C) in einem entsprechenden der Befestigungslöcher (13B) eingeklemmt ist.

12. Batteriegehäuse nach Anspruch 11, **dadurch gekennzeichnet, dass** jeder der Vorsprünge (14C) und das entsprechende der Befestigungslöcher (13B) durch Schweißen befestigt sind.

13. Batteriegehäuse nach Anspruch 9, **dadurch gekennzeichnet, dass** eine Vielzahl von Öffnungen (13C) an der Stützplatte (13) vorgesehen sind, die Bodenplatte (12) mit einer Vielzahl von Verbindungslöchern (12A) versehen ist und eines der Verbindungslöcher (12A) entsprechend einer der Öffnungen (13C) vorgesehen ist; und
das Batteriegehäuse eine Vielzahl von Befestigungselementen (15) umfasst, wobei eines der Befestigungselemente (15) entsprechend einer der Öffnungen (13C) vorgesehen ist und jedes der Befestigungselemente (15) der Reihe nach durch eine entsprechende der Öffnungen (13C) und ein entsprechendes der Verbindungslöcher (12A) hindurchgeführt ist, um fest mit der Bodenplatte (12) verbunden zu sein.

14. Batteriegehäuse nach einem der Ansprüche 1-5, **dadurch gekennzeichnet, dass** eine Dicke jedes der Verstärkungsträger (14A) größer oder gleich 1 mm und kleiner oder gleich 4 mm ist.

15. Elektrogerät, **gekennzeichnet durch** das Batteriegehäuse nach einem der Ansprüche 1-14.

## Revendications

1. Boîtier de batterie, **caractérisé en ce qu'**il comprend un corps de boîtier (10) et un module de batterie situé dans le corps de boîtier (10) ;
dans lequel le module de batterie comprend une pluralité de groupes de cellules agencés à intervalles le long d'une première direction, et chacun des groupes de cellules comprend une pluralité de cellules de batterie agencées à intervalles le long d'une deuxième direction ; et
**caractérisé en ce que** le corps de boîtier (10) comprend un cadre de boîtier (11) et un module de renforcement (14), le cadre de boîtier (11) comprend une plaque de fond (12) et une pluralité de traverses latérales (11A), la pluralité de traverses latérales (11A) sont agencées de manière fixe sur des bords de la plaque de fond (12) pour définir une cavité de logement (100), le module de batterie et le module de renforcement (14) sont tous deux agencés dans la cavité de logement (100), le module de renforcement (14) comprend une pluralité de poutres de renforcement (14A) agencées à intervalles le long de la première direction, les deux extrémités de chacune des poutres de renforcement (14A) sont reliées de manière fixe aux traverses latérales (11A), et entre deux poutres de renforcement adjacentes (14A) est inséré un des groupes de cellules,
dans lequel le boîtier de batterie comprend en outre un module de refroidissement liquide disposé dans la cavité de logement (100), le module de refroidissement liquide comprend une pluralité de plaques de refroidissement liquide agencées à intervalles le long de la première direction, la pluralité de plaques de refroidissement liquide et la pluralité des poutres de renforcement (14A) sont agencées en alternance le long de la première direction, un groupe de cellules est agencé entre deux plaques de refroidissement liquide et poutres de renforcement adjacentes (14A).

2. Boîtier de batterie selon la revendication 1, **caractérisé en ce que** chacune des poutres de renforcement (14A) bute contre des surfaces périphériques externes des cellules de batterie situées sur ses deux côtés, et chacune des poutres de renforcement (14A) épouse les surfaces périphériques externes des cellules de batterie.

3. Boîtier de batterie selon la revendication 2, **caractérisé en ce que** les cellules de batterie sont des cellules de batterie cylindriques, et chacune des poutres de renforcement (14A) présente une structure ondulée épousant les surfaces périphériques externes des cellules de batterie cylindriques.

4. Boîtier de batterie selon la revendication 1, **caractérisé en ce que** une pluralité d'évidements (11C) sont prévus sur les côtés des traverses latérales (11A) proches des poutres de renforcement (14A), une pluralité de parties d'insertion (14B) sont prévues sur les côtés des poutres de renforcement (14A) proches des traverses latérales (11A), et chacune des parties d'insertion (14B) est insérée dans un évidement correspondant (11C) ; ou alternativement,
la pluralité de parties d'insertion (14B) sont prévues sur les côtés des traverses latérales (11A) proches des poutres de renforcement (14A), la pluralité d'évidements (11C) sont prévus sur les côtés des poutres de renforcement (14A) proches des traverses latérales (11A), et chacune des parties d'insertion (14B) est insérée dans un évidement correspondant (11C).

5. Boîtier de batterie selon la revendication 4, **caractérisé en ce que** chacune des parties d'insertion (14B) et l'évidement correspondant (11C) sont fixés par soudage.

6. Boîtier de batterie selon l'une quelconque des revendications 1 à 5, **caractérisé en ce que** le corps de boîtier (10) comprend en outre deux longerons (11D) agencés opposément le long de la deuxième direction, les longerons (11D) sont situés sur les côtés des traverses latérales (11A) à l'opposé des poutres de renforcement (14A), chacun des longerons (11D) est pourvu d'une pluralité de points de montage (11E) agencés à intervalles le long de la première direction, et les points de montage (11E) correspondent aux poutres de renforcement (14A) une à une.

7. Boîtier de batterie selon la revendication 6, **caractérisé en ce que** les traverses latérales (11A) comprennent une première traverse latérale (11A1) et une deuxième traverse latérale (11A2) agencées opposément, les poutres de renforcement (14A) sont situées entre la première traverse latérale (11A1) et la deuxième traverse latérale (11A2) ; et
les longerons (11D) comprennent un premier longeron (11D1) et un deuxième longeron (11D2) agencés opposément, le premier longeron (11D1) est situé d'un côté de la première traverse latérale (11A1) à l'opposé des poutres de renforcement (14A), et le deuxième longeron (11D2) est situé d'un côté de la deuxième traverse latérale (11A2) à l'opposé des poutres de renforcement (14A).

8. Boîtier de batterie selon la revendication 7, **caractérisé en ce que** le premier longeron (11D1) et la première traverse latérale (11A1) sont formés d'une seule pièce, et le deuxième longeron (11D2) et la deuxième traverse latérale (11A2) sont formés d'une seule pièce.

9. Boîtier de batterie selon l'une quelconque des revendications 1 à 5, **caractérisé en ce que** le corps de boîtier (10) comprend en outre une plaque de support (13) située entre la plaque de fond (12) et le module de renforcement (14), et la plaque de support (13) est reliée de manière fixe au module de renforcement (14) et à la plaque de fond (12) et
la plaque de support (13) est pourvue d'une pluralité de fentes d'installation (13A), chacune des fentes d'installation (13A) traverse la plaque de support (13), les fentes d'installation (13A) et les poutres de renforcement (14A) sont agencées à intervalles, et chacune des cellules de batterie est installée dans une fente d'installation correspondante (13A)

10. Boîtier de batterie selon la revendication 9, **caractérisé en ce que** des fentes d'installation adjacentes (13A) sont agencées côte à côte ou en quinconce.

11. Boîtier de batterie selon la revendication 9, **caractérisé en ce que** l'un de la plaque de support (13) et de la poutre de renforcement (14A) est pourvu d'une pluralité de trous de fixation (13B), et l'autre de la plaque de support (13) et de la poutre de renforcement (14A) est pourvu de saillies (14C), une des saillies (14C) est prévue correspondant à un des trous de fixation (13B), et chacune des saillies (14C) est clavetée dans un trou de fixation correspondant (13B).

12. Boîtier de batterie selon la revendication 11, **caractérisé en ce que** chacune des saillies (14C) et le trou de fixation correspondant (13B) sont fixés par soudage.

13. Boîtier de batterie selon la revendication 9, **caractérisé en ce que** une pluralité d'ouvertures (13C) sont pratiquées dans la plaque de support (13), la plaque de fond (12) est pourvue d'une pluralité de trous de connexion (12A), et un des trous de connexion (12A) est prévu correspondant à une des ouvertures (13C) ; et
le boîtier de batterie comprend une pluralité d'éléments de fixation (15), un des éléments de fixation (15) est prévu correspondant à une des ouvertures (13C), et chacun des éléments de fixation (15) passe à travers une ouverture correspondante (13C) et un trou de connexion correspondant (12A) successivement pour être relié de manière fixe à la plaque de fond (12).

14. Boîtier de batterie selon l'une quelconque des revendications 1 à 5, **caractérisé en ce que** une épaisseur de chacune des poutres de renforcement (14A) est supérieure ou égale à 1 mm et inférieure ou égale à 4 mm.

15. Équipement électrique, **caractérisé en ce qu'**il comprend le boîtier de batterie selon l'une quelconque des revendications 1 à 14.
